# EUROPÄISCHE PATENTSCHRIFT

(11) **EP 2 628 963 B1**
(45) Veröffentlichungstag und Bekanntmachung des Hinweises auf die Patenterteilung: **28.09.2016**
(21) Anmeldenummer: 13401011.5
(22) Anmeldetag: 08.02.2013
(51) Int. Cl.: F16B 13/04, E04F 13/08, E04B 1/76

(54) **Dämmstoffdübel**
Insulation dowel
Cheville de matériau isolant

(30) Priorität: 14.02.2012 DE 102012101121
(43) Veröffentlichungstag der Anmeldung: 21.08.2013
(73) Patentinhaber: fischerwerke GmbH & Co. KG, 72178 Waldachtal (DE)
(72) Erfinder: Renz, Jürgen, 72202 Nagold (DE)

(56) Entgegenhaltungen:
- EP-A1- 0 105 829
- EP-A1- 1 248 000
- EP-A1- 1 338 803
- WO-A1-92/04547
- WO-A1-2007/082374
- WO-A1-2011/059140
- CH-A- 338 589
- DE-A1- 2 525 275
- DE-A1- 19 530 782
- FR-A1- 2 781 021
- FR-A5- 2 131 640
- US-A- 1 516 652
- US-A1- 2004 067 121

## Beschreibung

Die Erfindung betrifft einen Dämmstoffdübel mit den Merkmalen des Oberbegriffs des Anspruchs 1.

Aus der europäischen Patentanmeldung EP 1 457 688 A1 ist ein gattungsgemäßer Dämmstoffdübel bekannt. Der Dämmstoffdübel dient zum Befestigen einer Dämmstoffplatte an einem Verankerungsgrund und weist an seinem vorderen Ende einen Spreizabschnitt auf, der mittels einer Spreizschraube aufspreizbar ist. Am hinteren Ende des Dämmstoffdübels ist ein Halteelement in Form eines Haltetellers angeordnet, mit dem die Dämmstoffplatte gegen den Verankerungsgrund gedrückt und gehalten wird. Zwischen dem Halteteller und dem Spreizabschnitt ist ein Stauchbereich angeordnet, der in Längsrichtung stauchbar ist, so dass der Halteteller beim Eintreiben der Spreizschraube in Richtung des Spreizabschnitts bewegt und in den Dämmstoff hinein gedrückt werden kann. Der Stauchbereich ist als vollständig geschlossene Hülse ausgebildet und besteht aus einer dünnwandigem Spritzhaut und einer wendelartigen Spritzraupe.

Ein aus der europäischen Patentanmeldung EP 2 213 888 A2 bekannter gattungsgemäßer Dämmstoffdübel weist ebenfalls eine dünnwandige Hülse mit einer Wendel als Stauchbereich auf. Allerdings ist das Halteelement in diesem Fall nicht als Halteteller sondern als Dämmstoffgewinde ausgestaltet.

Die europäische Patentanmeldung EP 1 248 000 A1 zeigt einen Dämmstoffdübel, bei dem der Spreizabschnitt und der Stauchbereich einteilig ausgebildet sind und ineinander übergehen. Die den Spreizabschnitt und den Stauchbereich bildende Hülse ist in Längsrichtung geschlitzt, wodurch Spreizzungen und zwischen den Spreizzungen schlitzartige Öffnungen entstehen. Zwischen den Spreizzungen sind quer zur Längsachse verlaufende Querstege angeordnet, die die Spreizzungen in Längsstege unterteilen und die Längsstege in Umfangsrichtung miteinander verbinden. Aufgrund ihrer Ausbildung sind die Spreizzungen beim Eintreiben eines nagelartigen Spreizelements aufspreizbar. Zudem können die Spreizzungen beim Eintreiben eines nagelartigen Spreizelements in axialer Richtung gestaucht und dadurch relativ stark verkürzt werden. Nachteilig an diesem Dämmstoffdübel ist, dass die Spreizzungen beim Stauchen in radiale Richtung ausweichen und ausbauchen, so dass die schlitzartigen Öffnungen zwischen den Spreizzungen geweitet werden, wodurch an dem nagelartigen Spreizelement Kondenswasser anfallen kann. Der Dämmstoff muss auch relativ weich sein, da sonst das radiale Ausbauchen der Spreizzungen und somit das Stauchen des Stauchbereichs behindert wird. Zudem führt das Ausbauchen in weichen Baustoffen zur Bildung von Hohlräumen, was sich negativ auf die Dämmeigenschaften auswirkt.

Aufgabe der Erfindung ist es daher, einen Dämmstoffdübel mit einem verbesserten Stauchbereich vorzuschlagen.

Diese Aufgabe wird erfindungsgemäß durch einen Dämmstoffdübel mit den Merkmalen des Anspruchs 1 gelöst. Der erfindungsgemäße Dämmstoffdübel dient zum Befestigen einer Dämmstoffplatte an einem Verankerungsgrund. Hierzu weist der Dämmstoffdübel einen Spreizabschnitt auf, der in ein Bohrloch eingeführt werden kann, das im Verankerungsgrund eingebracht ist. Der Verankerungsgrund besteht beispielsweise aus Beton oder Mauerwerk. Durch das Eintreiben eines Spreizelements kann der Spreizabschnitt so aufgespreizt werden, dass der Dämmstoffdübel im Bohrloch fest verankert ist, beispielsweise durch Reibschluss mit der Bohrlochwand. Das Spreizelement ist typischerweise eine Schraube oder ein Nagel. "Eintreiben" meint hier das Einbringen des Spreizelements in den Spreizabschnitt, beispielsweise durch Einschrauben oder Einschlagen. An dem Dämmstoffdübel ist zudem ein Halteelement zum Halten der Dämmstoffplatte angeordnet. Das Halteelement befindet sich typischerweise am in Einbringrichtung hinteren Ende des Dämmstoffdübels und ist beispielsweise als Halteteller oder als Dämmstoffgewinde ausgebildet. Mit "Einbringrichtung" ist die Richtung gemeint, in der der Dämmstoffdübel in das Bohrloch eingebracht wird. Typischerweise ist die Einbringrichtung parallel zur Längsachse des Dämmstoffdübels. Zwischen dem Spreizabschnitt und dem Halteelement ist ein Stauchbereich angeordnet, der beim Eintreiben des Spreizelements in den Spreizabschnitt stauchbar ist. Durch das Stauchen des Stauchbereichs wird der Abstand zwischen dem Spreizabschnitt und dem Halteelement verringert. Im Stauchbereich sind Stege angeordnet, die ein Netz aus Maschen bilden, wobei die Maschen Öffnungen umschließen. Der Stauchbereich liegt beim Stauchen typischerweise im Bereich der Dämmstoffplatte, die im Verhältnis zum Verankerungsgrund relativ weich ist.

Kennzeichnend für den erfindungsgemäßen Dämmstoffdübel ist unter anderem, dass in einer ungestauchten Ausgangsstellung die Fläche der Öffnungen mindestens 50 % der Mantelfläche des ungestauchten Stauchbereichs entspricht. Als "Mantelfläche" wird hier allgemein die Hüllfläche der Wandung des Stauchbereichs bezeichnet. Der Stauchbereich ist insbesondere als Hohlzylinder ausgeführt, er kann aber auch nichtrotationssymmetrisch zur Längsachse des Dämmstoffdübels sein. Mit "Öffnungen" sind allgemein Durchbrüche in der Wand des Stauchbereichs gemeint, ohne ihre Form auf bestimmte Geometrien zu beschränken. Auch müssen die Öffnungen nicht alle gleich ausgebildet sein. Die "Fläche der Öffnungen" ist die Schnittfläche der Öffnungen mit der Mantelfläche. "Stege" sind allgemein die verbleibenden Bereiche der Wand des Stauchbereichs, die die Öffnungen umschließen. Die Öffnungen sind vor dem Eintreiben des Spreizelements offen und nicht durch eine Spritzhaut geschlossen. Hierdurch wird erreicht, dass im Stauchbereich nur so viel Material angeordnet ist, dass der Dämmstoffdübel ohne zu stauchen in das Bohrloch eingeführt werden kann, aber so wenig Material, dass das Stauchen des Stauchbereichs beim Eintreiben des Spreizelements nicht behindert wird. Zudem wird durch diese Ausgestaltung des Stauchbereichs relativ wenig Material benötigt, wodurch der Dämmstoffdübel kostengünstig herstellbar ist.

Vorzugsweise ist der Stauchbereich durch das Eintreiben des Spreizelements um mindestens die Hälfte seiner ungestauchte Länge stauchbar. Hierdurch ist es möglich, das Halteelement eines derartigen Dämmstoffdübels relativ weit in einem Dämmstoff zu versenken. Selbst dann, wenn der Dämmstoffdübel einen relativ langen Spreizabschnitt und ein relativ langes Spreizelement aufweist, kann das Halteelement so tief in eine Dämmstoffplatte eingeführt werden, dass Kältebrücken wirksam vermieden werden.

In einer bevorzugten Ausgestaltungsform des erfindungsgemäßen Dämmstoffdübels vergrößert sich der Durchmesser des Stauchbereichs beim Stauchen um maximal 50 %. Mit "Durchmesser des Stauchbereichs" ist der Durchmesser eines den Stauchbereich umschreibenden Umkreises gemeint. Durch die relativ geringe Vergrößerung des Durchmessers wird das Stauchen nicht durch den Dämmstoff behindert und das durch das Stauchen verformte Material des Stauchbereichs erzeugt keine Hohlräume im Dämmstoff, die die Dämmeigenschaften beeinträchtigen.

Bei einer weiteren bevorzugten Ausgestaltungsform des erfindungsgemäßen Dämmstoffdübels bildet der gestauchte Stauchbereich in einer Endstellung eine im Wesentlichen geschlossene Hülse. "Im Wesentlichen geschlossen" meint hier, dass die Fläche der Öffnungen des gestauchten Stauchbereichs noch maximal 10%, insbesondere weniger als 5 %, vorzugsweise maximal 1 % der Mantelfläche des ungestauchten Stauchbereichs beträgt. "Geschlossen" bezieht sich auf die Mantelfläche, nicht auf die Grund- und Deckfläche des insbesondere als Hohlzylinder ausgeführten Stauchbereichs. Die Stege weichen und/oder knicken beim Stauchen aus ihrer Ausgangsstellung aus, werden verdreht und gegeneinander und übereinander geschoben, und derart bewegt, dass sie die Öffnungen im Wesentlichen verschließen. Durch die Bildung der im Wesentlichen geschlossenen Hülse kann keine oder nur wenig Feuchtigkeit in den Hohlschaft des Dämmstoffdübels eindringen und sich kein Tauwasser am Spreizelement bilden. Durch die erfindungsgemäße Ausbildung des Dämmstoffdübels wird eine Korrosion des Spreizelements vermieden.

In einer bevorzugten Ausgestaltungsform des erfindungsgemäßen Dämmstoffdübels sind im Stauchbereich mehrere Längsstege und mehrere Querstege in Längsrichtung hintereinander angeordnet. Die Längsstege und die Querstege bilden gemeinsam das Netz aus Maschen und umschließen die Öffnungen. Ein Längssteg ist vorzugsweise in Richtung der Längsachse ausgerichtet. Er verbindet zwei im Wesentlichen in Längsrichtung voneinander beabstandete Punkte, die aber auch in Querrichtung zueinander versetzt sein können. Dagegen verbinden die Querstege zwei im Wesentlichen in Umfangsrichtung beabstandete Punkte. Dabei müssen die Längsstege nicht zwingend parallel zur Längsachse verlaufen, ebenso müssen die Querstege nicht zwingend parallel zur Umfangsrichtung verlaufen. Insbesondere sind mehrere in Längsrichtung hintereinander angeordnete Längsstege miteinander verbunden. Zwei in Längsrichtung hintereinander angeordnete Querstege weisen insbesondere in der ungestauchten Ausgangsstellung einen Abstand zueinander auf, während sie in der gestauchten Endstellung aneinander anliegen, oder der Abstand sich auf die Breite eines geknickten und nun zwischen den Querstegen liegenden Längsstegs reduziert ist.

Die Längsstege knicken beim Stauchen im Wesentlichen in Umfangsrichtung. Die Längsstege weichen beim Stauchen so aus, dass sie sich im Wesentlichen auf der Mantelfläche bewegen. Eine radiale Bewegung ist untergeordnet oder nicht vorhanden. Die Längsstege weichen im Wesentlichen gerade nicht in radialer Richtung aus, so dass der Stauchbereich beim Stauchen nicht planmäßig ausbaucht, wie dies aus dem Stand der Technik bekannt ist, und sich der Durchmesser des Stauchbereichs beim Stauchen nur unwesentlich vergrößert. Zudem ist es hierdurch möglich, dass der Stauchbereich nach dem Stauchen in einer Endstellung die im Wesentlichen geschlossene Hülse bildet.

Weiterhin ist bevorzugt, dass die Längsstege in der Ausgangsstellung gegenüber der Längsachse geneigt sind. Die Längsstege verlaufen also nicht parallel zur Längsachse, sondern weichen von einer Parallelen zur Längsachse ab, wobei nicht alle Längsstege geneigt sein müssen. Insbesondere sind die Längsstege nicht in radialer Richtung geneigt, sondern quer dazu in Richtung der Umfangsrichtung. Durch die Neigung wird die Knickrichtung vorgegeben, in der die Stege beim Stauchen aus ihrer ursprünglichen Lage ausweichen. Somit wird über die Neigung der Längsstege auch die Form des gestauchten Stauchbereichs beeinflusst. Zudem kann die Stabilität des Stauchbereichs über die Neigung der Längsstege eingestellt werden, so dass das Stauchen des Stauchbereichs erst beim Eintreiben des Spreizelements erfolgt, nicht schon beim Einschieben des Dämmstoffdübels in das Bohrloch.

Vorzugsweise sind die Längsstege in der Ausgangsstellung nicht nur geneigt, sondern auch in sich gekrümmt, wodurch die Knickrichtung und die zum Stauchen benötigte Kraft zusätzlich beeinflusst und gesteuert werden kann.

Vorzugsweise bilden mehrere aneinander anschließende Längsstege eine Wellenlinie. Sind die Längsstege nicht in sich gekrümmt, so ist mit Wellenlinie gemeint, dass hintereinander liegende Längsstege in entgegengesetzte Richtungen geneigt sind. "Hintereinander liegend" bedeutet hier nicht, dass die Längsstege aneinander anschließen, sondern nur, dass sie in Längsrichtung zueinander versetzt angeordnet sind. Insbesondere bildet ein Längssteg eine halbe Welle, so dass zwei aneinander anschließende Längsstege einander entgegengerichtet geneigt und/oder gekrümmt sind, so dass die Richtungen, in die in Längsrichtung hintereinander liegende Längsstege ausweichen, einander entgegengesetzt sind, was zu einem gleichmäßigen Stauchen des Stauchbereichs führt.

In einer weiteren bevorzugten Ausführungsform des erfindungsgemäßen Dämmstoffdübels bilden zwei Längsstege und zwei Querstege eine Masche, wobei die Längsstege und die Querstege im Wesentlichen gleich lang sind. Die Längsstege und die Querstege bilden insbesondere ein Parallelogramm, insbesondere ein Quadrat. Ein Stauchbereich mit derartig ausgestalteten Maschen lässt sich besonders gut stauchen. Insbesondere ist diese Ausgestaltung zur Bildung einer geschlossenen Hülse in der Endstellung vorteilhaft.

Vorzugsweise bilden in der Ausgangsstellung mehrere in Umfangsrichtung aneinander anliegende Querstege einen in Umfangsrichtung geschlossenen Ring. Der geschlossene Ring ist stabil und verhindert, dass die Längsstege, mit denen die Querstege verbunden sind, radial nach außen knicken. Insbesondere bilden vier Querstege einen Ring, wobei die Länge der vier Querstege insbesondere gleich groß ist.

Weiterhin ist bevorzugt, dass in der Ausgangsstellung zwei in Längsrichtung hintereinander angeordnete Querstege eine unterschiedlich große Längsausdehnung aufweisen, sich also unterschiedlich stark in Längsrichtung erstrecken. Durch die unterschiedlich große Längsausdehnung wird die Stabilität der Querstege bestimmt, so dass sie je nach Ausgestaltung mehr oder weniger stabilisierend auf die Längsstege einwirken können, wodurch die Bewegung der Längsstege beim Stauchen beeinflusst werden kann.

Erfindungsgemäß ist ferner das Halteelement als Dämmstoffgewinde ausgebildet, das gegenüber dem Stauchbereich drehbar am Dämmstoffdübel angeordnet ist. Dabei beeinflusst die beim Drehen des Dämmstoffgewindes entstehende Reibung die Ausweichbewegung der Längsstege beim Stauchen des Stauchbereichs. Die Reibung führt zu einer torsionsbedingten Verdrehung des Stauchbereichs in Umfangsrichtung, so dass ein vorderes und ein hinteres Ende eines Längsstegs relativ zueinander in Umfangsrichtung bewegt werden.

Die Erfindung wird nachfolgend anhand von drei dargestellten Ausführungsbeispielen näher erläutert.

Es zeigen:
- Figur 1: einen ersten erfindungsgemäßen Dämmstoffdübel in einer ungestauchten Ausgangsstellung in einer perspektivischen Ansicht;
- Figur 2: der Stauchbereich des ersten erfindungsgemäßen Dämmstoffdübels in einer Detaildarstellung in einer Seitenansicht;
- Figur 3: eine Detaildarstellung des gestauchten Stauchbereichs des ersten erfindungsgemäßen Dämmstoffdübels in einer Ansicht;
- Figur 4: einen Stauchbereich eines alternativen Dämmstoffdübels in einer Seitenansicht; und
- Figur 5: einen Stauchbereich eines weiteren alternativen Dämmstoffdübels in einer Seitenansicht.

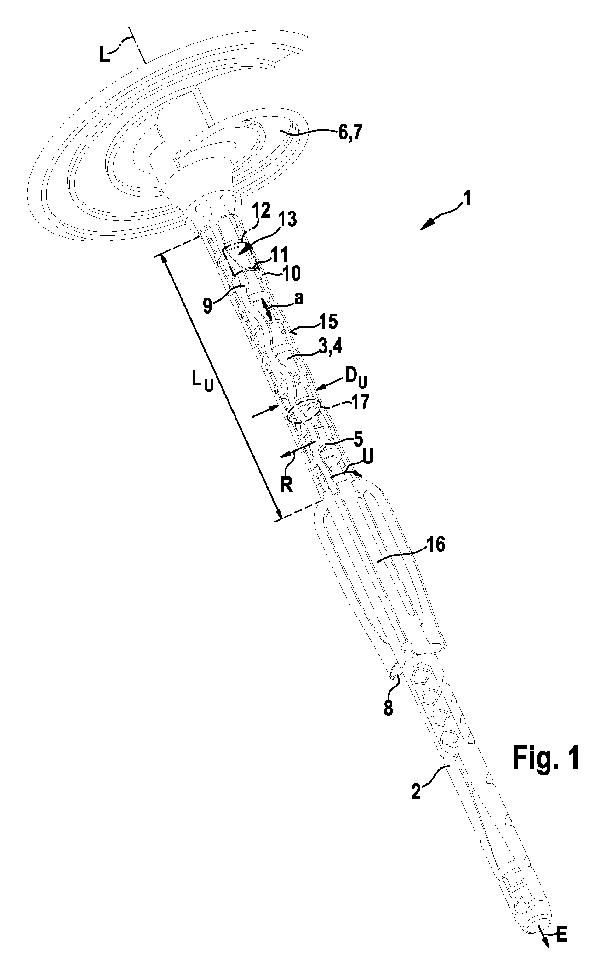

Figur 1 zeigt einen erfindungsgemäßen Dämmstoffdübel 1 zum Befestigen einer nicht dargestellten Dämmstoffplatte an einem ebenfalls nicht dargestellten Verankerungsgrund. Der erfindungsgemäße Dämmstoffdübel 1 weist an seinem in Einbringrichtung E vorderen Ende einen Spreizabschnitt 2 auf, der mittels eines Spreizelements 3, einer Schraube 4 mit einem Schraubengewinde 5, zum Verankern in einem Bohrloch im Verankerungsgrund aufspreizbar ist. Zum Aufspreizen wird die Schraube 4 in den Spreizabschnitt 2 in Richtung der Einbringrichtung E drehend eingetrieben. Der erfindungsgemäße Dämmstoffdübel 1 weist in seinem in Einbringrichtung E hinteren Ende ein Halteelement 6 zum Halten der Dämmstoffplatte auf. Das Halteelement 6 ist als Dämmstoffgewinde 7 ausgebildet, das in die Dämmstoffplatte eingedreht werden kann. Der Dämmstoffdübel 1 wird in das Bohrloch eingebracht, bis eine Anschlagschulter 8, die am vorderen Ende einer sich am hinteren Ende des Spreizabschnitts 2 anschließenden druckfesten Abstandshülse 16 angeordnet ist, am Verankerungsgrund ansteht. Der Spreizabschnitts 2 ist nun ortsfest und das Halteelement 6 kann durch Drehen weiter in die Dämmstoffplatte, in Richtung des Spreizabschnitts 2 bewegt werden. Hierdurch wird ein Stauchbereich 9, der zwischen dem Spreizabschnitt 2 und dem Halteelement 6 angeordnet ist, gestaucht und der Abstand zwischen dem Spreizabschnitt 2 und dem Halteelement 6 verringert.

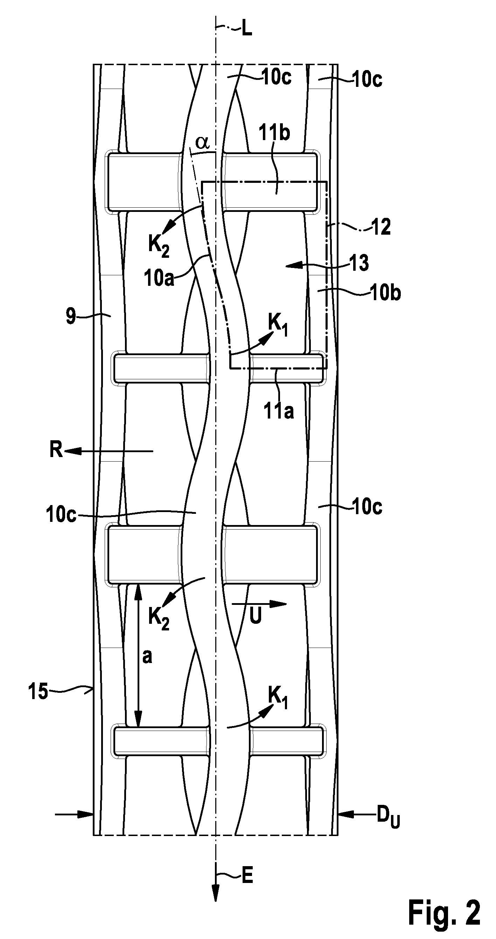

Im Stauchbereich 9 sind Längsstege 10 und Querstege 11 angeordnet, die ein Netz aus Maschen 12 bilden, wobei jede Masche 12 eine Öffnung 13 umschließt, wie dies in Figur 2 dargestellt ist. In Figur 2 ist eine Masche 12 zu sehen, die von zwei Längsstegen 10a, 10b und von zwei Querstegen 11a, 11 b umschlossen ist. Die Längsstege 10 und die Querstege 11 sind im Wesentlichen gleich lang, so dass die Öffnungen 13 annähernd quadratisch sind, wobei die Längsstege 10 in der im Figur 2 dargestellten ungestauchten Ausgangsstellung in sich gekrümmt und gegenüber der Längsachse L um den Neigungswinkel α geneigt sind. Die Fläche der Öffnungen 13 entspricht in der ungestauchten Ausgangsstellung weit mehr als 50% der Mantelfläche 15 des zylinderförmigen Stauchbereichs 9.

An die beiden Längsstege 10a, 10b schließen sich weitere Längsstege 10c in Längsrichtung L an, die ebenfalls in sich gekrümmt und gegenüber der Längsachse L geneigt sind. Die in Längsrichtung aneinander anschließenden Längsstege 10a, 10c bilden zusammen eine Wellenlinie, wobei jeder Längssteg 10 eine halbe Welle bildet. In der ungestauchten Ausgangsstellung weisen die Querstege 11 a, 11 b in Längsrichtung L einen Abstand a zueinander auf, der im Wesentlichen der Länge der Längsstege 10 entspricht. Wie in Figur 1 zu erkennen ist, bilden in der Ausgangsstellung vier Querstege 11, die in Umfangsrichtung U aneinander anschließen, einen geschlossenen Ring 17, der die Längsstege 10 stabilisiert und an einem Knicken in radialer Richtung R hindert. Dabei weisen in der Ausgangsstellung zwei in Längsrichtung L hintereinander angeordnete Querstege 11a, 11b eine unterschiedlich große Längsausdehnung auf. Der erste Quersteg 11a weist einen kleineren Querschnitt auf, so dass er die Längsstege 10 am Knicken in radialer Richtung R hindert, während der zweite Quersteg 11 b die Längsstege zusätzlich in Umfangsrichtung U stabilisiert.

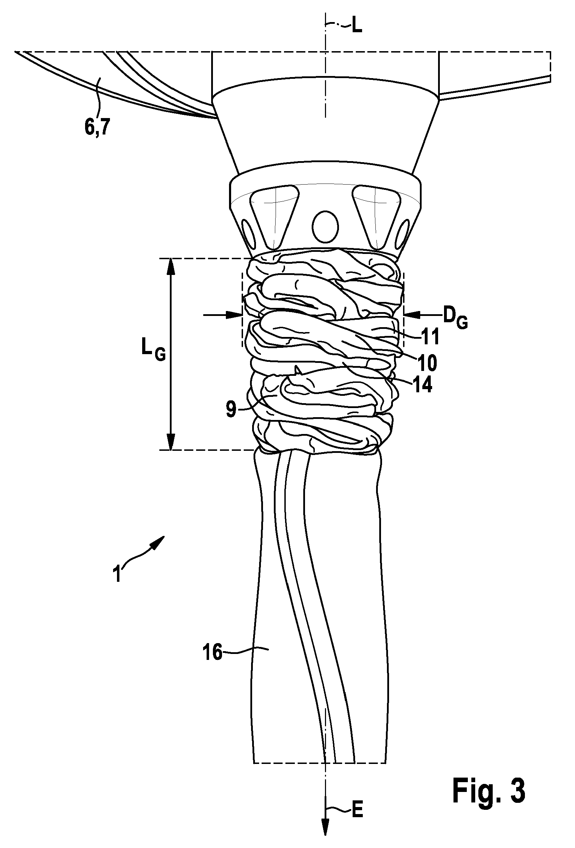

Beim Stauchen des Stauchbereichs 9 knicken die Längsstege 10 im Wesentlichen in Richtung der Umfangsrichtung U, wie dies durch die Pfeile der Knickrichtung K₁, K₂ in Figur 2 angedeutet ist. Die Pfeile der Knickrichtung K₁, K₂ deuten an, wie sich die Enden der Längsstege 10 beim Stauchen relativ zueinander bewegen. Die Längsstege 10 knicken beim Stauchen gerade nicht in radialer Richtung aus, so dass der Durchmesser D_{U} des ungestauchten Stauchbereichs 9 sich beim Stauchen nur unwesentlich, um maximal 50 %, auf den Durchmesser D_{G} des gestauchten Stauchbereichs 9 vergrößert, wie dies in Figur 3 zu sehen ist. Durch die große Fläche der Öffnungen 13 in der Mantelfläche 15 kann der Stauchbereich 9 durch das Eintreiben des Spreizelements 3 stark gestaucht werden. Dabei wird die Länge L_{U} des ungestauchten Stauchbereichs 9 um mindestens die Hälfte auf die Länge L_{G} des gestauchten Stauchbereichs 9 verringert. Der Abstand a zwischen den in Längsrichtung L hintereinander liegenden Querstegen 11 verringert sich dabei so sehr, dass zwei direkt hintereinander liegende Querstege 11 sich berühren, beziehungsweise nur durch einen zwischen ihnen liegenden Längssteg 11, der beim Stauchen in Umfangsrichtung U ausgewichen ist, getrennt sind. Zusammen mit den Längsstegen 10, die beim Stauchen in Umfangsrichtung U geknickt und ausgewichen sind und im gestauchten Endzustand, wie in Figur 3 zu sehen ist, sich im Wesentlichen in Umfangsrichtung U erstrecken, bilden die Querstege 11 eine im Wesentlichen geschlossene Hülse 14, die das metallische Spreizelement 3 im Wesentlichen abdichtend umschließt und ein Eindringen von Feuchtigkeit in den Hohlschaft des Dämmstoffdübels 1 verhindert, so dass das Spreizelement 3 vor Korrosion geschützt ist. Wie in Figur 3 zu sehen ist, sind nach dem Stauchen praktisch keine Öffnungen 13 mehr vorhanden, und ihre Fläche beträgt nach dem Stauchen weniger als 1 % der Mantelfläche 15 des ungestauchten Stauchbereichs 9, wie er in den Figuren 1 und 2 zu sehen ist.

Durch die Ausbildung des Stauchbereichs 9 des erfindungsgemäßen Dämmstoffdübels 1 wird ein Dämmstoffdübel 1 geschaffen, dessen Stauchbereich 9 relativ leicht und stark gestaucht werden kann, ohne dass dabei Probleme mit dem Korrosionsschutz des Spreizelements 3 entstehen und ohne die Dämmeigenschaften der mit dem Dämmstoffdübel 1 gehaltenen Dämmstoffplatte zu verschlechtern.

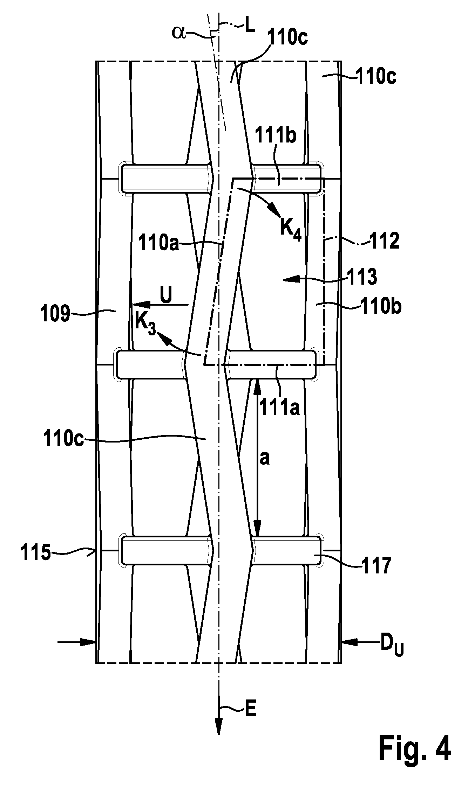

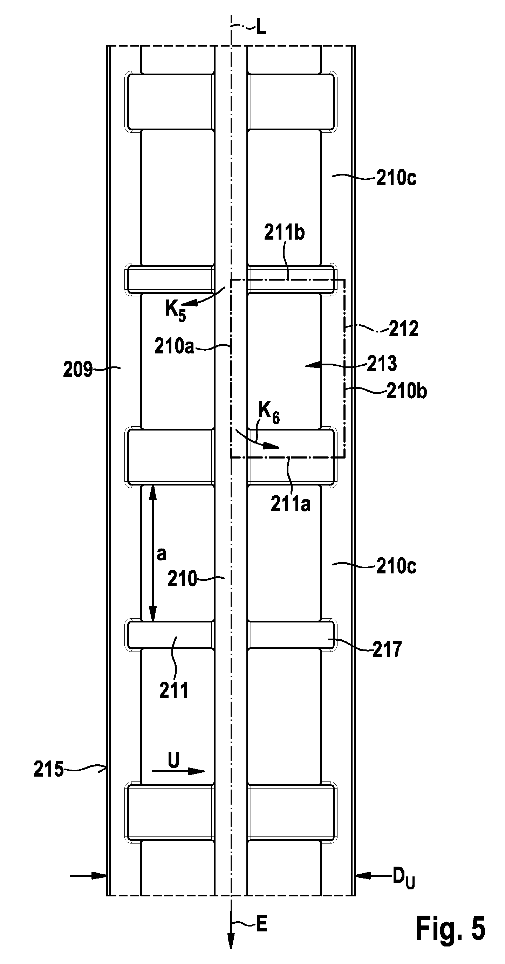

In den Figuren 4 und 5 sind Stauchbereiche 109, 209 alternativer Dämmstoffdübel dargestellt. Um Wiederholungen zu vermeiden, wird im Folgenden nur auf die Unterschiede zu dem oben beschriebenen Stauchbereich 9 des ersten erfindungsgemäßen Dämmstoffdübels 1 eingegangen. Der in Figur 4 dargestellte Stauchbereich 109 unterscheidet sich gegenüber dem in Figur 2 dargestellten Stauchbereich 9 dadurch, dass die Längsstege 110 nicht in sich gekrümmt, sondern geradlinig ausgeführt sind. Zudem weisen die Querstege 111 die gleiche Längenausdehnung auf. Der in Figur 5 dargestellte Stauchbereich 209 weist dagegen Längsstege 210 auf, die zudem nicht geneigt, sondern parallel zur Längsachse L sind. Die Knickrichtung K₅, K₆ in die die Längsstege 210 beim Stauchen des Stauchbereichs 209 ausweichen, wird in diesem Fall nur durch die Unterschiede in der stabilisierenden Wirkung der Querstege 211a, 211b beeinflusst, die durch die unterschiedliche Längsausdehnung hervorgerufen wird.

Da das Halteelement 6 bei den in den Figuren 1 bis 5 dargestellten Ausführungsbeispielen als Dämmstoffgewinde 7 ausgeführt ist, das gegenüber dem Stauchbereich 9, 109, 209 drehbar ist, wird die Knickrichtung K₁-K₆ der Längsstege 10, 110, 210 zudem durch die Reibung zwischen dem Dämmstoffgewinde 6 und dem Stauchbereich 9, 109, 209 beeinflusst. Die Reibung kann zu einer Torsion des Stauchbereichs 9, 109, 209 führen. Die Längsstege 10, 110, 210 weichen dann nicht nur auf Grund des Stauchens des Stauchbereichs 9, 109, 209 in Richtung der Umfangsrichtung U aus, die beiden Enden eines Längsstegs 10, 110, 210 werden zudem durch die torsionsbedingte Verdrehung relativ zueinander in Umfangsrichtung U verschoben.

### Bezugszeichenliste

### Dämmstoffdübel

- 1: Dämmstoffdübel
- 2: Spreizabschnitt
- 3: Spreizelement
- 4: Schraube
- 5: Schraubengewinde
- 6: Halteelement
- 7: Dämmstoffgewinde
- 8: Anschlagschulter
- 9, 109, 209: Stauchbereich
- 10, 110, 210: Längssteg
- 11, 111, 211: Quersteg
- 12, 112, 212: Masche
- 13, 113, 213: Öffnung
- 14: Hülse
- 15, 115, 215: Mantelfläche
- 16: Abstandshülse
- 17, 117, 217: Ring
- L_{U}: Länge des ungestauchten Stauchbereichs 9
- L_{G}: Länge des gestauchten Stauchbereichs 9
- D_{U}: Durchmesser des ungestauchten Stauchbereichs 9
- D_{G}: Durchmesser des gestauchten Stauchbereichs 9
- L: Längsachse
- U: Umfangsrichtung
- R: radiale Richtung
- E: Einbringrichtung
- K₁-K₆: Knickrichtung
- a: Abstand der Querstege 11, 111, 211
- α: Neigungswinkel

## Patentansprüche

1. Dämmstoffdübel (1) zum Befestigen einer Dämmstoffplatte an einem Verankerungsgrund,
mit einem Spreizabschnitt (2), der mittels eines Spreizelements (3) zum Verankern in einem Bohrloch im Verankerungsgrund aufspreizbar ist,
mit einem Halteelement (6) zum Halten der Dämmstoffplatte, und
mit einem Stauchbereich (9, 109, 209), der zwischen dem Spreizabschnitt (2) und dem Halteelement (6) angeordnet ist und der beim Eintreiben des Spreizelements (3) stauchbar ist, wodurch sich der Abstand zwischen dem Spreizabschnitt (2) und dem Halteelement (6) verringert, **dadurch gekennzeichnet, dass** im Stauchbereich (9) Stege (10, 110, 210, 11, 111, 211) angeordnet sind, die ein Netz aus Maschen (12, 112, 212) bilden,wobei die Maschen (12, 112, 212) Öffnungen (13, 113, 213) umschließen, dass in einer ungestauchten Ausgangsstellung die Fläche der Öffnungen (13, 113, 213) mindestens 50 % der Mantelfläche (15, 115, 215) des ungestauchten Stauchbereichs (9, 109, 209) entspricht, dass im Stauchbereich (9, 109, 209) mehrere Längsstege (10, 110, 210) und Querstege (11, 111, 211) in Längsrichtung (L) hintereinander angeordnet sind, dass die Längsstege (10, 110, 210) beim Stauchen im Wesentlichen in Umfangrichtung (U) knicken, und dass das Halteelement (6) als Dämmstoffgewinde (7) ausgebildet ist, das gegenüber dem Stauchbereich (9, 109, 209) drehbar am Dämmstoffdübel (1) angeordnet ist, derart, dass die beim Drehen des Dämmstoffgewindes (7) entstehende Reibung die Ausweichbewegung der Längsstege (10, 110, 210) beim Stauchen des Stauchbereichs (9, 109, 209) beeinflusst und zu einer torsionsbedingten Verdrehung des Stauchbereichs (9, 109, 209) in Umfangsrichtung (U) führt, so dass ein vorderes und ein hinteres Ende eines Längsstegs (10, 110, 210) relativ zueinander in Umfangsrichtung (U) bewegt werden.

2. Dämmstoffdübel nach Anspruch 1, **dadurch gekennzeichnet, dass** der Stauchbereich (9, 109, 209) durch das Eintreiben des Spreizelements (3) um mindestens die Hälfte seiner ungestauchten Länge (L_{U}) stauchbar ist.

3. Dämmstoffdübel nach Anspruch 1 oder 2, **dadurch gekennzeichnet, dass** sich der Durchmesser (D_{U}) des ungestauchten Stauchbereichs (9, 109, 209) beim Stauchen um maximal 50 % vergrößert.

4. Dämmstoffdübel nach einem der Ansprüche 1 bis 3, **dadurch gekennzeichnet, dass** der gestauchte Stauchbereich (9, 109, 209) in einer Endstellung eine im Wesentlichen geschlossene Hülse (14) bildet.

5. Dämmstoffdübel nach einem der Ansprüche 1 bis 4, **dadurch gekennzeichnet, dass** die Längsstege (10, 110) in der Ausgangsstellung gegenüber der Längsachse (L) geneigt sind.

6. Dämmstoffdübel nach Anspruch 5, **dadurch gekennzeichnet, dass** die Längsstege (10) in der Ausgangsstellung in sich gekrümmt sind.

7. Dämmstoffdübel nach Anspruch 5 oder 6, **dadurch gekennzeichnet, dass** in der Ausgangsstellung mehrere in Längsrichtung (L) aneinander anschließende Längsstege (10, 110) eine Wellenlinie bilden.

8. Dämmstoffdübel nach einem der Ansprüche 1 bis 7, **dadurch gekennzeichnet, dass** zwei Längsstege (10, 110, 210) und zwei Querstege (11, 111, 211) eine Masche (13, 113, 213) bilden und die Längsstege (10, 110, 210) und die Querstege (11, 111, 211) insbesondere im Wesentlichen gleich lang sind.

9. Dämmstoffdübel nach einem der Ansprüche 1 bis 8, **dadurch gekennzeichnet, dass** in der Ausgangsstellung mehrere in Umfangsrichtung (U) aneinander liegende Querstege (11, 111, 211) einen in Umfangsrichtung (U) geschlossenen Ring (17, 117, 217) bilden.

10. Dämmstoffdübel nach einem der Ansprüche 1 bis 9, **dadurch gekennzeichnet, dass** in der Ausgangsstellung zwei in Längsrichtung (L) hintereinander angeordnete Querstege (11, 111, 211) eine unterschiedlich große Längsausdehnung aufweisen.

## Claims

1. Insulation fixing plug (1) for fixing an insulation panel to an anchoring substrate,
having an expansion portion (2) which is arranged to be expanded by means of an expander element (3) for anchoring in a drilled hole in the anchoring substrate.
having a holding element (6) for holding the insulation panel, and
having a compression zone (9, 109, 209) which is arranged between the expansion portion (2) and the holding element (6) and which is arranged to be compressed when the expander element (3) is driven in, with the result that the distance between the expansion portion (2) and the holding element (6) is reduced,
**characterised in that**
in the compression zone (9) there are arranged ribs (10, 110, 210, 11, 111, 211) which form a network of meshes (12, 112, 212), the meshes (12, 112, 212) enclosing openings (13, 113, 213);
in a non-compressed starting position the area of the openings (13, 113, 213) corresponds to at least 50 % of the curved surface area (15, 115, 215) of the non-compressed compression zone (9, 109, 209); in the compression zone (9, 109, 209) a plurality of longitudinal ribs (10, 110, 210) and transverse ribs (11, 111, 211) are arranged one after the other in the longitudinal direction (L); on compression, the longitudinal ribs (10, 110, 210) bend substantially in the circumferential direction (U); and the holding element (6) is in the form of an insulation thread (7) which is arranged on the insulation fixing plug (1) so as to be rotatable relative to the compression zone (9, 109, 209) in such a way that the friction which develops during rotation of the insulation thread (7) affects the yielding movement of the longitudinal ribs (10, 110, 210) during compression of the compression zone (9, 109, 209) and results in torsion-induced twisting of the compression zone (9, 109, 209) in the circumferential direction (U), so that front and rear ends of a longitudinal rib (10, 110, 210) are moved relative to one another in the circumferential direction (U).

2. Insulation fixing plug according to claim 1, **characterised in that** the compression zone (9, 109, 209) is arranged to be compressed by at least half of its non-compressed length (Lᵤ) as a result of the expander element (3) being driven in.

3. Insulation fixing plug according to claim 1 or 2, **characterised in that** the diameter (Dᵤ) of the non-compressed compression zone (9, 109, 209) is enlarged by a maximum of 50 % on compression.

4. Insulation fixing plug according to any one of claims 1 to 3, **characterised in that** in an end position the compressed compression zone (9, 109, 209) forms a substantially closed sleeve (14).

5. Insulation fixing plug according to any one of claims 1 to 4, **characterised in that** in the starting position the longitudinal ribs (10, 110) are inclined with respect to the longitudinal axis (L).

6. Insulation fixing plug according to claim 5, **characterised in that** in the starting position the longitudinal ribs (10) are inherently curved.

7. Insulation fixing plug according to claim 5 or 6, **characterised in that** in the starting position a plurality of longitudinal ribs (10, 110) adjoining one another in the longitudinal direction (L) form an undulating line.

8. Insulation fixing plug according to any one of claims 1 to 7, **characterised in that** two longitudinal ribs (10, 110, 210) and two transverse ribs (11, 111, 211) form a mesh (13, 113, 213) and the longitudinal ribs (10, 110, 210) and the transverse ribs (11, 111, 211) are especially of substantially equal length.

9. Insulation fixing plug according to any one of claims 1 to 8, **characterised in that** in the starting position a plurality of transverse ribs (11, 111, 211) located one next to the other in the circumferential direction (U) form a ring (17, 117, 217) that is closed in the circumferential direction (U).

10. Insulation fixing plug according to any one of claims 1 to 9, **characterised in that** in the starting position two transverse ribs (11, 111, 211) arranged one after the other in the longitudinal direction (L) have different longitudinal extents.

## Revendications

1. Cheville (1) pour matériau isolant, pour la fixation d'un panneau de matériau isolant sur un fond d'ancrage,
avec une partie d'expansion (2), qui peut être expansée au moyen d'un élément d'expansion (3) pour l'ancrage dans un trou percé dans le fond d'ancrage,
avec un élément de maintien (6) pour maintenir le panneau de matériau isolant,
et avec une région de compression (9, 109, 209), qui est disposée entre la partie d'expansion (2) et l'élément de maintien (6) et qui peut être comprimée lors de l'enfoncement de l'élément d'expansion (3), de sorte que la distance entre la partie d'expansion (2) et l'élément de maintien (6) se réduit,
**caractérisée en ce que** des branches (10, 110, 210, 11, 111, 211) sont disposées dans la région de compression (9), qui forment un réseau de mailles (12, 112, 212), sachant que les mailles (12, 112, 212) enferment des ouvertures (13, 113, 213),
**en ce que**, dans une position initiale non comprimée, la surface des ouvertures (13, 113, 213) correspond à au moins 50% de la surface d'enveloppe (15, 115, 215) de la région de compression (9, 109, 209) non comprimée, **en ce que** plusieurs branches longitudinales (10, 110, 210) et transversales (11, 111, 211) sont disposées les unes à la suite des autres en direction longitudinale (L) dans la région de compression (9, 109, 209), **en ce que** les branches longitudinales (10, 110, 210) s'infléchissent essentiellement en direction périphérique (U) lors de la compression, et **en ce que** l'élément de maintien (6) est réalisé sous la forme d'un filetage (7) pour matériau isolant, qui est disposé sur la cheville (1) pour matériau isolant à rotation par rapport à la région de compression (9, 109, 209), de telle sorte que le frottement produit lors de la rotation du filetage (7) pour matériau isolant agit sur le mouvement d'affaissement des branches longitudinales (10, 110, 210) lors de la compression de la région de compression (9, 109, 209) et produit une rotation par torsion de la région de compression (9, 109, 209) en direction périphérique (U), de sorte qu'une extrémité avant et une extrémité arrière d'une branche longitudinale (10, 110, 210) sont déplacées l'une par rapport à l'autre en direction périphérique (U).

2. Cheville pour matériau isolant selon la revendication 1, **caractérisée en ce que** la région de compression (9, 109, 209) peut être, par l'enfoncement de l'élément d'expansion (3), comprimée d'au moins la moitié de sa longueur non comprimée (L_{U}).

3. Cheville pour matériau isolant selon la revendication 1 ou 2, **caractérisée en ce que** le diamètre (Du) de la région de compression (9, 109, 209) non comprimée augmente au maximum de 50 % lors de la compression.

4. Cheville pour matériau isolant selon l'une des revendications 1 à 3, **caractérisée en ce que** la région de compression (9, 109, 209) comprimée forme dans une position finale un manchon (14) essentiellement fermé.

5. Cheville pour matériau isolant selon l'une des revendications 1 à 4, **caractérisée en ce que** les branches longitudinales (10, 110) sont, dans la position initiale, inclinées par rapport à l'axe longitudinal (L).

6. Cheville pour matériau isolant selon la revendication 5, **caractérisée en ce que** les branches longitudinales (10) sont en elles-mêmes cintrées dans la position initiale.

7. Cheville pour matériau isolant selon la revendication 5 ou 6, **caractérisée en ce que**, dans la position initiale, plusieurs branches longitudinales (10, 110) se raccordant les unes aux autres en direction longitudinale (L) forment une ligne ondulée.

8. Cheville pour matériau isolant selon l'une des revendications 1 à 7, **caractérisée en ce que** deux branches longitudinales (10, 110, 210) et deux branches transversales (11, 111, 211) forment une maille (13, 113, 213), et les branches longitudinales (10, 110, 210) et les branches transversales (11, 111, 211) sont notamment sensiblement de même longueur.

9. Cheville pour matériau isolant selon l'une des revendications 1 à 8, **caractérisée en ce que**, dans la position initiale, plusieurs branches transversales (11, 111, 211) juxtaposées en direction périphérique (U) forment un anneau fermé (17, 117, 217) en direction périphérique (U).

10. Cheville pour matériau isolant selon l'une des revendications 1 à 9, **caractérisée en ce que**, dans la position initiale, deux branches transversales (11, 111, 211) disposées l'une à la suite de l'autre en direction longitudinale (L) présentent une étendue longitudinale de grandeur différente.
